# EUROPÄISCHE PATENTSCHRIFT

(11) **EP 3 437 961 B1**
(45) Veröffentlichungstag und Bekanntmachung des Hinweises auf die Patenterteilung: **21.08.2019**
(21) Anmeldenummer: 18185446.4
(22) Anmeldetag: 25.07.2018
(51) Int. Cl.: B62D 5/30

(54) **HYDRAULISCHES LENKSYSTEM**
HYDRAULIC STEERING SYSTEM
SYSTÈME DE DIRECTION HYDRAULIQUE

(30) Priorität: 02.08.2017 DE 102017213407
(43) Veröffentlichungstag der Anmeldung: 06.02.2019
(73) Patentinhaber: Jungheinrich Aktiengesellschaft, 22047 Hamburg (DE)
(72) Erfinder: BERNAU, René, 85368 Moosburg (DE); SEDLMAIER, Rainer, 84434 Kirchberg (DE)
(74) Vertreter: Weickmann & Weickmann PartmbB

(56) Entgegenhaltungen:
- DE-A1-102013 104 794

## Beschreibung

Die vorliegende Erfindung betrifft ein hydraulisches Lenksystem für ein Fahrzeug, insbesondere ein Flurförderzeug, umfassend einen Lenkzylinder mit zwei Kammern und einem jeweiligen Hydraulikanschluss an jeder der beiden Kammern zur Betätigung einer Lenkbewegung von wenigstens einem Rad des Fahrzeugs, wenigstens eine Hydraulikpumpe, wenigstens einen Hydrauliktank zur Aufnahme von Hydrauliköl und einen Lenkblock, umfassend zwei erste Hydraulikanschlüsse zur Verbindung mit den beiden Hydraulikanschlüssen des Lenkzylinders, wenigstens zwei zweite Hydraulikanschlüsse zur Versorgung des Lenkblocks mit Hydrauliköl von der Hydraulikpumpe und Rückführung des Hydrauliköls in den Hydrauliktank, und eine steuerbare Ventilanordnung, welche Steuersignale von einer Lenkwinkelerfassungsvorrichtung erhält und dazu eingerichtet ist, anhand dieser Steuersignale Hydrauliköl zu dem Lenkzylinder zu fördern, wobei die steuerbare Ventilanordnung ferner dazu eingerichtet ist, in wenigstens eine Neutralstellung umschaltbar zu sein, in welcher sie ein Strömen von Hydrauliköl zwischen den beiden Kammern des Lenkzylinders ermöglicht.

Es ist aus dem Stand der Technik bekannt, Lenkbewegungen von Fahrzeugen und insbesondere von Flurförderzeugen, die durch wenigstens ein lenkbares Rad des Fahrzeugs durchgeführt werden sollen, mittels eines Lenkservostats durch direkte Übertragung der Drehrichtung und Drehgeschwindigkeit einer Lenkradbewegung zu realisieren. Eine auf diesem Funktionsprinzip beruhende Lenkvorrichtung ist beispielsweise aus der DE 198 19 404 A1 bekannt.

Ebenfalls ist es bekannt, zu diesem Zweck sogenannte Kompaktaggregate einzusetzen, die in der Regel im Gegengewicht des Flurförderzeugs untergebracht sind.

Bei derartigen hydraulischen Lenksystemen besteht keine mechanische Verbindung zwischen dem Lenkrad und den gelenkten Rädern, so dass Sorge dafür getragen werden muss, dass die Lenkung auch bei einem Versagen der Hydraulikpumpe oder anderer Komponenten wenigstens ein behelfsmäßiges Notlenken erlaubt. Solche Notlenkfunktionen sind teilweise in Lenkservostaten wie demjenigen aus der DE 198 19 404 A1 bereits integriert und können bei Kompaktaggregaten durch ein manuelles Drehen der Motorwelle realisiert werden.

Ferner sei auf die DE 10 2013 104 794 A1 verwiesen, welche ein gattungsgemäßes Lenksystem für ein Fahrzeug mit einer steuerbaren Ventilanordnung und eine Pumpeinrichtung mit den Merkmalen des Oberbegriffs des unabhängigen Anspruchs offenbart.

Wenngleich die genannten Vorrichtungen an sich bewährte Bauteile sind, so hat sich in ihrem Betrieb doch auch gezeigt, dass sie einige Nachteile mit sich bringen. So weisen die beschriebenen Lenkservostate beispielsweise einen schlechten Wirkungsgrad auf und ihre Integration im Fahrzeug und insbesondere in Flurförderzeugen ist platzaufwändig, da eine komplexe Lenksäule benötigt wird, die den zur Verfügung stehenden Platz im Fußraum des Fahrzeugs einschränkt. Des Weiteren müssen für ihren Einsatz Lenkservostat-Hochdruckleitungen im Bereich des Fahrzeugführers verlegt werden, was zu störenden Strömungsgeräuschen während der Lenkbewegung führen kann. Die ebenfalls angesprochenen Kompaktaggregate sind hingegen im Vergleich mit Lenkservostaten sehr teuer und benötigen ebenfalls viel Platz bei ihrer Integration im Fahrzeug.

Es ist daher die Aufgabe der vorliegenden Erfindung, ein hydraulisches Lenksystem mit integrierter Notlenkvorrichtung bereitzustellen, in welchem einerseits die eben beschriebenen Nachteile von bekannten Vorrichtungen beseitigt sind, das aber andererseits die Vorteile von Lenkservostaten und Kompaktaggregaten vereint. Durch die Erfindung wird ein kostengünstiges, platzsparendes und energieeffizientes Lenksystem mit einer verbesserten Notlenkfunktion bereitgestellt.

Um diese Aufgabe zu lösen, umfasst das erfindungsgemäße hydraulische Lenksystem ferner eine Pumpenvorrichtung, welche dazu eingerichtet ist, das Strömen von Hydrauliköl zwischen den beiden Kammern des Lenkzylinders bei Neutralstellung der Ventilanordnung anzutreiben. Durch Betätigen dieser Pumpenvorrichtung kann mittels eines erzwungenen Strömens von Hydrauliköl zwischen den beiden Kammern des Lenkzylinders eine Notlenkfunktion durchgeführt werden, wobei durch die Integration der Pumpenvorrichtung in das hydraulische Lenksystem dieses kompakt und kostengünstig gehalten werden kann.

Insbesondere wenn für das hydraulische Lenksystem keine eigene Hydraulikpumpe vorgesehen ist, sondern das Lenksystem sich eine einzelne Hydraulikpumpe mit weiteren Hydraulikverbrauchern des Fahrzeugs teilt, kann es vorteilhaft sein, wenn das erfindungsgemäße Lenksystem ferner ein Prioritätsventil umfasst, welches dazu eingerichtet ist, eine ausreichende Versorgung des Lenkblocks mit Hydrauliköl gegenüber den anderen Verbrauchern im regulären Betrieb der Hydraulikpumpe und des Fahrzeugs sicherzustellen.

In einer besonders einfachen und kostengünstigen Ausführungsform des erfindungsgemäßen Lenksystems kann die Pumpenvorrichtung manuell betätigbar sein. Auf diese Weise wird eine universelle Notlenkfunktion geschaffen, die auf keinerlei Energie- oder Hydraulikversorgung angewiesen ist und somit auch bei einem umfangreichen Ausfall sämtlicher Systeme des Fahrzeugs einsetzbar bleibt. Andererseits könnte jedoch selbstverständlich eine elektrisch angetriebene Pumpenvorrichtung oder ähnliches vorgesehen werden, wobei in diesem Fall jedoch vorzugsweise darauf geachtet werden sollte, dass diese auch unabhängig von den Bordsystemen des Fahrzeugs funktionstüchtig sein kann, beispielsweise indem eine unabhängige Stromversorgung in Form einer Batterie vorgesehen wird.

Sofern das erfindungsgemäße hydraulische Lenksystem einen üblich dimensionierten Lenkzylinder umfasst, kann es ferner vorteilhaft sein, wenn die Pumpenvorrichtung ein Hubvolumen von etwa 7 - 8 cm³ aufweist. Dieser Wert hat sich als optimaler Kompromiss zwischen Handhabbarkeit und Bauraum- sowie Kostenreduktion herausgestellt.

Da es wie bereits angesprochen wünschenswert ist, die Notlenkfunktion des erfindungsgemäßen hydraulischen Lenksystems auch bei einem vollständigen Ausfall aller Fahrzeugsysteme sicherzustellen, kann es weiterhin vorteilhaft sein, wenn die Ventilanordnung eine manuelle Umschalteinrichtung für das Umschalten in die wenigstens eine Neutralstellung umfasst, beispielsweise einen vom Fahrzeugführer betätigbaren Hebel.

Erfindungsgemäß ist die Ventilanordnung in zwei verschiedene Neutralstellungen umschaltbar sein, welche jeweils eine der beiden Strömungsrichtungen von Hydrauliköl von einer der beiden Kammern des Lenkzylinders in die jeweils andere erlauben. Auf diese Weise kann durch Auswahl der jeweiligen Neutralstellung die Lenkrichtung festgelegt werden, in die durch Betätigung der Pumpe das wenigstens eine lenkbare Rad eingeschlagen wird.

Um einen robusten und zuverlässigen Betrieb des erfindungsgemäßen hydraulischen Lenksystems zu gewährleisten, kann es zudem vorteilhaft sein, wenn dieses in den Verbindungsleitungen zwischen dem Lenkblock und dem Lenkzylinder jeweils wenigstens ein Schockventil umfasst, welches dazu eingerichtet ist, eine Beschädigung des Lenkzylinders durch Überbelastungen zu verhindern.

Aus ähnlichen Gründen kann es weiterhin vorteilhaft sein, wenn das erfindungsgemäße hydraulische Lenksystem an einer oder mehreren geeigneten Stellen, beispielsweise in Hydraulikleitungen, wenigstens ein Druckbegrenzungsventil umfasst.

Zuletzt kann es zur Reduktion des benötigten Bauraums des erfindungsgemäßen hydraulischen Lenksystems vorteilhaft sein, wenn die Pumpenvorrichtung mit dem Lenkblock integral ausgebildet ist, beispielsweise in einem gemeinsamen Gehäuse aufgenommen ist oder an dem Lenkblock angebracht ist.

Gemäß einem zweiten Aspekt betrifft die vorliegende Erfindung ein Fahrzeug, insbesondere ein Flurförderzeug, umfassend wenigstens ein lenkbares Rad, wenigstens eine Lenkwinkelerfassungsvorrichtung, welche eine Lenkrichtung oder/und Lenkgeschwindigkeit einer von dem Fahrer des Fahrzeugs bedienbaren Lenkvorrichtung, beispielsweise eines Lenkrads, erfasst und Steuersignale ausgibt, sowie ein erfindungsgemäßes hydraulisches Lenksystem, welches die Steuersignale der Lenkwinkelerfassungsvorrichtung erhält und zur Betätigung einer Lenkbewegung des wenigstens einen lenkbaren Rads angeordnet und eingerichtet ist.

In dem erfindungsgemäßen Fahrzeug kann die Ventilanordnung abhängig von weiteren Randbedingungen beispielsweise in einem Gegengewicht, einem Fahrerschutzdach, einem Rahmen oder einem Motorraum des Fahrzeugs angeordnet sein.

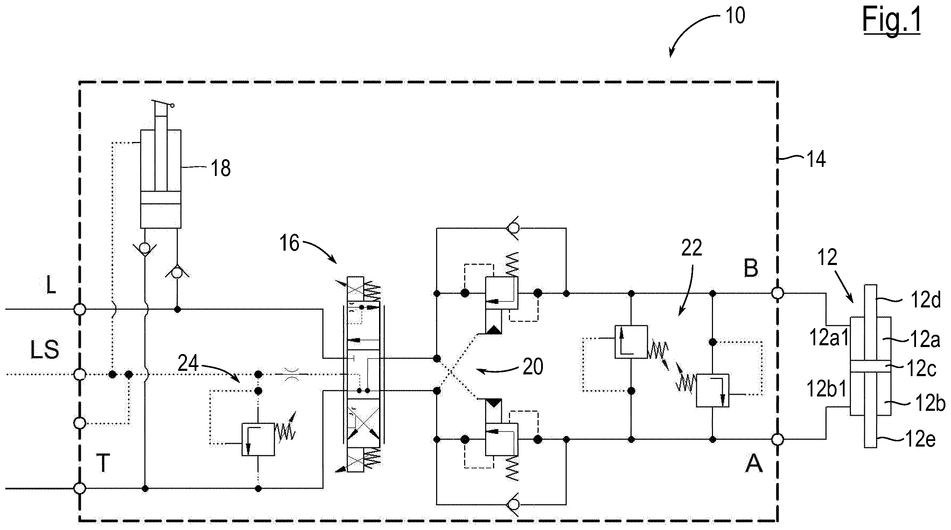

Weitere Eigenschaften und Vorteile der vorliegenden Erfindung werden aus der nachfolgenden Beschreibung eines Ausführungsbeispiels deutlich, wenn diese zusammen mit der beiliegenden Figur 1 betrachtet wird. Diese Figur 1 zeigt eine schematische Darstellung eines erfindungsgemäßen hydraulischen Lenksystems.

In der Figur 1 ist eine Ausführungsform des erfindungsgemäßen hydraulischen Lenksystems ganz allgemein mit dem Bezugszeichen 10 bezeichnet. Es umfasst einen hydraulischen Lenkzylinder 12, der wiederum eine erste und eine zweite Kammer 12a, 12b und einen Kolben 12c umfasst. Indem über einen jeweiligen Hydraulikanschluss 12a1, 12b1 in eine der beiden Kammern 12a, 12b Hydrauliköl gepumpt wird und dementsprechend aus der anderen Kammer Hydrauliköl verdrängt wird, verschiebt sich der Kolben 12c im Zylinder und erzeugt durch Vermittlung zweier Schubstangen 12d, 12e eine Lenkbewegung von zwei nicht gezeigten Rädern eines ebenfalls nicht gezeigten Fahrzeugs, in dem das gezeigte hydraulische Lenksystem 10 eingesetzt wird.

Des Weiteren umfasst das hydraulische Lenksystem 10 einen Lenkblock 14, der einerseits zwei erste Hydraulikanschlüsse A, B zur Verbindung mit den beiden Hydraulikanschlüssen 12a1, 12b1 des Lenkzylinders 12 über Hydraulikleitungen umfasst, und andererseits drei zweite Hydraulikanschlüsse L, LS für die Druck- und Prioritätsversorgung über ein nicht gezeigtes Prioritätsventil sowie T für den Rücklauf des Öls in den ebenfalls nicht gezeigten Hydrauliktank.

Des Weiteren umfasst der Lenkblock 14 eine steuerbare Ventilanordnung 16 in Form eines Vier/Drei-Wege-Proportionalventils. Dieses Proportionalventil bildet eine steuerbare Ventilanordnung 16, die mittels Steuersignalen von einer Lenkwinkelerfassungsvorrichtung derart angesteuert werden kann, dass sie Hydrauliköl zu dem Lenkzylinder 12 fördert, um dort die gewünschte Lenkbewegung auslösen zu lassen.

Des Weiteren ist das Proportionalventil 16 manuell in zwei Neutralstellungen umschaltbar, in denen die beiden Kammern 12a, 12b des Lenkzylinders 12 über eine Handpumpe 18 miteinander kurzgeschlossen sind. Je nachdem, welche der beiden Neutralstellungen manuell ausgewählt wird, führt eine Betätigung der Handpumpe 18 entweder zu einem Strömen von Hydrauliköl von der ersten Zylinderkammer 12a in die zweite Zylinderkammer 12b oder umgekehrt. Auf diese Weise kann ohne Vorsehen eines zusätzlichen Hydrauliktanks ein Pumpen von Hydrauliköl zwischen den beiden Kammern 12a und 12b des Lenkzylinders 12 zum Durchführen einer Notlenkfunktion erreicht werden.

Dadurch, dass die Pumpe 18 manuell betätigbar ist und ebenfalls das Umschalten des Proportionalventils 16 in die beiden Neutralstellungen manuell erfolgen kann, kann die Notlenkfunktion auch bei einem völligen Ausfall sämtlicher hydraulischer und elektrischer Systeme des Fahrzeugs bereitgestellt werden.

Zuletzt umfasst das hydraulische Lenksystem 10 ein Lasthalteventil 20, ein Schockventil 22 und ein Druckbegrenzungsventil 24, mit denen der reguläre Betrieb des Lenksystems 10 in an sich bekannter Weise sichergestellt wird.

## Patentansprüche

1. Hydraulisches Lenksystem für ein Fahrzeug, insbesondere ein Flurförderzeug, umfassend:
- einen Lenkzylinder (12) mit zwei Kammern (12a, 12b) und einem jeweiligen Hydraulikanschluss (12a1, 12b1) an jeder der beiden Kammern (12a, 12b) zur Betätigung einer Lenkbewegung von wenigstens einem Rad des Fahrzeugs;
- wenigstens eine Hydraulikpumpe;
- wenigstens einen Hydrauliktank zur Aufnahme von Hydrauliköl; und
- einen Lenkblock (14), umfassend:
∘ zwei erste Hydraulikanschlüsse (A, B) zur Verbindung mit den beiden Hydraulikanschlüssen (12a1, 12b1) des Lenkzylinders (12);
∘ wenigstens zwei zweite Hydraulikanschlüsse (P, LS, T) zur Versorgung des Lenkblocks (14) mit Hydrauliköl von der Hydraulikpumpe und Rückführung des Hydrauliköls in den Hydrauliktank; und
∘ eine steuerbare Ventilanordnung (16), welche Steuersignale von einer Lenkwinkelerfassungsvorrichtung erhält und dazu eingerichtet ist, anhand dieser Steuersignale Hydrauliköl zu dem Lenkzylinder (12) zu fördern;
wobei die steuerbare Ventilanordnung (16) ferner dazu eingerichtet ist, in wenigstens eine Neutralstellung umschaltbar zu sein, in welcher sie ein Strömen von Hydrauliköl zwischen den beiden Kammern (12a, 12b) des Lenkzylinders ermöglicht, und wobei
das hydraulische Lenksystem ferner eine Pumpenvorrichtung (18) umfasst, welche dazu eingerichtet ist, das Strömen von Hydrauliköl zwischen den beiden Kammern (12a, 12b) des Lenkzylinders (12) bei Neutralstellung der Ventilanordnung (16) anzutreiben,
**dadurch gekennzeichnet, dass** die Ventilanordnung (16) in zwei Neutralstellungen umschaltbar ist, welche jeweils eine der beiden Strömungsrichtungen von Hydrauliköl von einer der Kammern (12a, 12b) des Lenkzylinders (12) in die jeweils andere erlauben.

2. Hydraulisches Lenksystem nach Anspruch 1, **dadurch gekennzeichnet, dass** es ferner ein Prioritätsventil umfasst, welches dazu eingerichtet ist, eine ausreichende Versorgung des Lenkblocks (14) mit Hydrauliköl gegenüber anderen Verbrauchern sicherzustellen.

3. Hydraulisches Lenksystem nach einem der vorhergehenden Ansprüche, **dadurch gekennzeichnet, dass** die Pumpenvorrichtung (18) manuell betätigbar ist.

4. Hydraulisches Lenksystem nach einem der vorhergehenden Ansprüche, **dadurch gekennzeichnet, dass** die Pumpenvorrichtung (18) ein Hubvolumen von etwa 7 - 8 cm³ aufweist.

5. Hydraulisches Lenksystem nach einem der vorhergehenden Ansprüche, **dadurch gekennzeichnet, dass** die Ventilanordnung (16) eine manuelle Umschalteinrichtung für das Umschalten in die wenigstens eine Neutralstellung umfasst.

6. Hydraulisches Lenksystem nach einem der vorhergehenden Ansprüche, **dadurch gekennzeichnet, dass** es in den Verbindungen des Lenkblocks (14) mit dem Lenkzylinder (12) jeweils wenigstens ein Schockventil (22) umfasst, welches dazu eingerichtet ist, eine Beschädigung des Lenkzylinders (12) durch Überbelastungen zu verhindern.

7. Hydraulisches Lenksystem nach einem der vorhergehenden Ansprüche, **dadurch gekennzeichnet, dass** es ferner wenigstens ein Druckbegrenzungsventil (24) umfasst.

8. Hydraulisches Lenksystem nach einem der vorhergehenden Ansprüche, **dadurch gekennzeichnet, dass** die Pumpenvorrichtung (18) mit dem Lenkblock (14) integral ausgebildet ist.

9. Fahrzeug, insbesondere Flurförderzeug, umfassend:
- wenigstens ein lenkbares Rad;
- wenigstens eine Lenkwinkelerfassungsvorrichtung, welche eine Lenkrichtung oder/und Lenkgeschwindigkeit einer von einem Fahrer des Fahrzeugs bedienbaren Lenkvorrichtung erfasst und Steuersignale ausgibt; und
- eine hydraulisches Lenksystem (10) nach einem der vorhergehenden Ansprüche, welches die Steuersignale der Lenkwinkelerfassungsvorrichtung erhält und zur Betätigung einer Lenkbewegung des wenigstens einen lenkbaren Rads angeordnet ist.

10. Fahrzeug nach Anspruch 9, wobei die Ventilanordnung (16) in einem Gegengewicht, Fahrerschutzdach, Rahmen oder Motorraum des Fahrzeugs angeordnet ist.

## Claims

1. Hydraulic steering system for a vehicle, in particular an industrial truck, comprising:
- a steering cylinder (12) having two chambers (12a, 12b) and a corresponding hydraulic connector (12a1, 12b1) on each of the two chambers (12a, 12b) for actuating a steering movement of at least one wheel of the vehicle;
- at least one hydraulic pump;
- at least one hydraulic tank for receiving hydraulic oil; and
- a steering block (14) comprising:
∘ two first hydraulic connectors (A, B) for connecting to the two hydraulic connectors (12a1, 12b1) of the steering cylinder (12);
∘ at least two second hydraulic connectors (P, LS, T) for supplying the steering block (14) with hydraulic oil from the hydraulic pump and returning the hydraulic oil to the hydraulic tank; and
∘ a controllable valve assembly (16) which receives control signals from a steering angle detection device and is designed to convey hydraulic oil to the steering cylinder (12) on the basis of these control signals;
the controllable valve assembly (16) also being designed to be switchable into at least one neutral position in which it permits a flow of hydraulic oil between the two chambers (12a, 12b) of the steering cylinder, and the hydraulic steering system further comprising a pump device (18) which is designed to drive the flow of hydraulic oil between the two chambers (12a, 12b) of the steering cylinder (12) when the valve assembly (16) is in the neutral position, **characterised in that** the valve assembly (16) is switchable into two neutral positions, each of which allow one of the two flow directions of hydraulic oil from one of the chambers (12a, 12b) of the steering cylinder (12) into the other.

2. Hydraulic steering system according to claim 1, **characterised in that** it further comprises a priority valve which is designed to ensure a sufficient supply of hydraulic oil to the steering block (14) with respect to other loads.

3. Hydraulic steering system according to either of the preceding claims, **characterised in that** the pump device (18) can be manually actuated.

4. Hydraulic steering system according to any of the preceding claims, **characterised in that** the pump device (18) has a swept volume of approximately 7-8 cm³.

5. Hydraulic steering system according to any of the preceding claims, **characterised in that** the valve assembly (16) comprises a manual switch apparatus for switching into the at least one neutral position.

6. Hydraulic steering system according to any of the preceding claims, **characterised in that**, in each of the connections between the steering block (14) and the steering cylinder (12), it comprises at least one shock valve (22) which is designed to prevent damage to the steering cylinder (12) caused by overloading.

7. Hydraulic steering system according to any of the preceding claims, **characterised in that** it further comprises at least one pressure control valve (24).

8. Hydraulic steering system according to any of the preceding claims, **characterized in that** the pump device (18) is integral with the steering block (14).

9. Vehicle, in particular an industrial truck, comprising:
- at least one steerable wheel;
- at least one steering angle detection device which detects a steering direction and/or steering speed of a steering device operable by a driver of the vehicle and which outputs control signals; and
- a hydraulic steering system (10) according to any of the preceding claims, which receives the control signals from the steering angle detection device and is arranged to actuate a steering movement of the at least one steerable wheel.

10. Vehicle according to claim 9, wherein the valve assembly (16) is arranged in a counterweight, overheard guard, frame or engine compartment of the vehicle.

## Revendications

1. Système de direction hydraulique pour un véhicule, en particulier un chariot de manutention, comprenant :
- un vérin de direction (12) avec deux chambres (12a, 12b) et un raccord hydraulique (12a1, 12b1) respectif au niveau de chacune des deux chambres (12a, 12b) pour l'actionnement d'un mouvement de direction d'au moins une roue du véhicule ;
- au moins une pompe hydraulique ;
- au moins un réservoir hydraulique pour la réception d'huile hydraulique ; et
- un bloc de direction (14), comprenant :
-- deux premiers raccords hydrauliques (A, B) pour la liaison aux deux raccords hydrauliques (12a1, 12b1) du vérin de direction (12) ;
--au moins deux deuxièmes raccords hydrauliques (P, LS, T) pour l'alimentation du bloc de direction (14) en huile hydraulique de la pompe hydraulique et retour de l'huile hydraulique dans le réservoir hydraulique ; et
-- un ensemble de soupape (16) pouvant être commandé, lequel reçoit des signaux de commande d'un dispositif de détection d'angle de braquage et est aménagé pour transporter de l'huile hydraulique au vérin de direction (12) à l'aide de ces signaux de commande ;
dans lequel l'ensemble de soupape (16) pouvant être commandé est aménagé en outre pour être commutable dans au moins une position neutre, dans laquelle il permet un écoulement d'huile hydraulique entre les deux chambres (12a, 12b) du vérin de direction, et dans lequel
le système de direction hydraulique comprend en outre un dispositif de pompe (18), lequel est aménagé pour entraîner l'écoulement d'huile hydraulique entre les deux chambres (12a, 12b) du vérin de direction (12) en cas de position neutre de l'ensemble de soupape (16),
**caractérisé en ce que** l'ensemble de soupape (16) est commutable dans deux positions neutres, lesquelles autorisent respectivement une des deux directions d'écoulement d'huile hydraulique d'une des chambres (12a, 12b) du vérin de direction (12) à respectivement l'autre.

2. Système de direction hydraulique selon la revendication 1, **caractérisé en ce qu'**il comprend en outre une soupape de priorité, laquelle est aménagée pour assurer une alimentation suffisante du bloc de direction (14) en huile hydraulique par rapport à d'autres consommateurs.

3. Système de direction hydraulique selon l'une quelconque des revendications précédentes, **caractérisé en ce que** le dispositif de pompe (18) est actionnable manuellement.

4. Système de direction hydraulique selon l'une quelconque des revendications précédentes, **caractérisé en ce que** le dispositif de pompe (18) présente une cylindrée d'environ 7 à 8 cm³.

5. Système de direction hydraulique selon l'une quelconque des revendications précédentes, **caractérisé en ce que** l'ensemble de soupape (16) comprend un dispositif de commutation manuel pour la commutation dans l'au moins une position neutre.

6. Système de direction hydraulique selon l'une quelconque des revendications précédentes, **caractérisé en ce qu'**il comprend dans les liaisons du bloc de direction (14) avec le vérin de direction (12) respectivement au moins une soupape antichoc (22), laquelle est aménagée pour empêcher un endommagement du vérin de direction (12) par surcharges.

7. Système de direction hydraulique selon l'une quelconque des revendications précédentes, **caractérisé en ce qu'**il comprend en outre au moins une soupape de limitation de pression (24).

8. Système de direction hydraulique selon l'une quelconque des revendications précédentes, **caractérisé en ce que** le dispositif de pompe (18) est réalisé d'un seul tenant avec le bloc de direction (14).

9. Véhicule, en particulier chariot de manutention, comprenant :
- au moins une roue dirigeable ;
- au moins un dispositif de détection d'angle de braquage, lequel détecte une direction de braquage et/ou vitesse de braquage d'un dispositif de direction pouvant être commandé par un conducteur du véhicule et émet des signaux de commande ; et
- un système de direction hydraulique (10) selon l'une quelconque des revendications précédentes, lequel reçoit les signaux de commande du dispositif de détection d'angle de braquage et est agencé pour l'actionnement d'un mouvement de direction de l'au moins une roue dirigeable.

10. Véhicule selon la revendication 9, dans lequel l'ensemble de soupape (16) est agencé dans un contrepoids, toit de protection du conducteur, cadre ou compartiment moteur du véhicule.
